# EUROPEAN PATENT APPLICATION

(11) **EP 4 840 655 A1**
(43) Date of publication of application: **18.11.2026**
(21) Application number: 26178489.6
(22) Date of filing: 13.05.2026
(51) Int. Cl.: B60G 11/27

(54) **IMPROVED SUSPENSION SYSTEM FOR A HEAVY VEHICLE**

(30) Priority: 15.05.2025 IT 202500010970
(71) Applicant: Iveco S.p.A., 10156 Torino (IT)
(72) Inventor: GUNGL, Michael, 10156 Torino (IT); KONRAD, Christian, 10156 Torino (IT); WROBLEWSKI, Matthias, 10156 Torino (IT)
(74) Representative: Studio Torta S.p.A.

(57) **Abstract**

Vehicle (1) comprising a frame (2) extending along a longitudinal axis (A) direction and a transversal axis (B) direction and at least one axle (4) and a suspension system (3) for connecting at least one axle (4) to frame (2), the suspension system (3) comprising a longitudinal, a transversal retaining elements (13, 16), spring means (6) a stabilizer bar (9) and a support element (5), wherein the transversal retaining element (13) is placed on one between a front and a rear position with respect to axle (4) along longitudinal axis (A), the longitudinal retaining element (16) and the stabilizer bar (19) being placed in the other between the front and the rear position with respect to axle (4) along longitudinal axis (A).

## Description

### CROSS-REFERENCE TO RELATED APPLICATIONS

This patent application claims priority from Italian patent application no. 102025000010970 filed on May 15, 2025, the entire disclosure of which is incorporated herein by reference.

### TECHNICAL FIELD

The present invention relates to a suspension system, in particular a suspension system for a heavy vehicle suspension system.

### BACKGROUND OF THE INVENTION

Heavy vehicles such road transport vehicles, e.g. trucks, comprise axles that are suspended with respect to the frame in order to avoid excessive transmission of loads to the vehicle body.

Indeed, due to the asperities/shape of the road, wheels would move and transfer loads to the axles that need to be dampened in order to avoid excessive loads to reach the frame.

To this aim, different typologies of suspension systems are present. The most known layouts comprise essentially at least one between support elements, connection elements, damping means operationally interposed between the axle and the frame.

One of the most common layouts foresees the presence of a support element, such as a spring beam, connected to the axle and to the frame by air springs and further comprising connection means such as a V-shaped rod, a longitudinal member and a torsional bar interposed in different configurations between the axle and the frame.

According to the above configuration, axle usually moves about a curved trajectory, in particular along a radius centered on the connection between the V-road and the frame.

Such curved trajectory has a vertical component and a longitudinal component. Such longitudinal component is detrimental to the operation of the suspension and generates problem to the elements fixed in the vicinity of the axle and suspension system.

Indeed, since vehicles tends to be more and more electrified, axles are usually e-axles and electrical batteries for electrical machines carried by e-axles are placed in the neighborhood of the e-axle.

Accordingly, any longitudinal movement could generate an impact with the batteries thereby leading to damages that could be also fatal for the vehicle and its occupants.

Therefore, the need is felt to provide a suspension configuration voted to reduce the longitudinal displacement of the axle while providing the same, or even better, suspension performances.

The aim of the present invention is to satisfy the above-mentioned needs in a compact, optimized and cost effective way.

### SUMMARY OF THE INVENTION

The aforementioned aim is reached by a suspension system and a vehicle as claimed in the appended independent claims.

Preferred embodiments of the invention are realized according to the claims dependent on or related to the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a vehicular portion comprising a suspension system for a heavy vehicle according to the invention;
- Figure 2 is a lateral view of the suspension system of the invention; and
- Figure 3 is a top view of the suspension system of the invention.

### DETAILED DESCRIPTION OF THE INVENTION

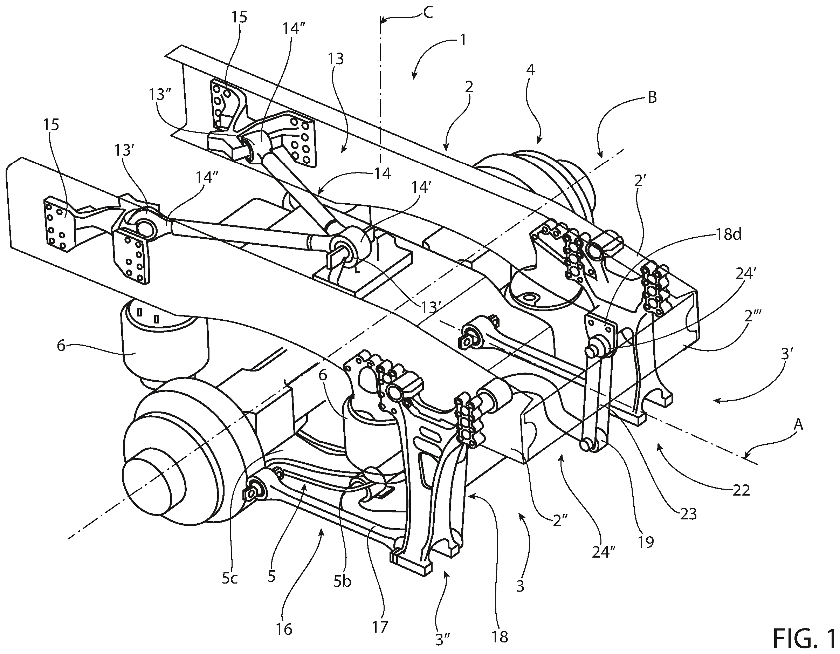

Figure 1 discloses a portion of a vehicle 1 comprising a frame 2. The frame 2 comprises, as per se known, a pair of side members 2', 2'' extending along a longitudinal axis A of the vehicle 1 and transversally spaced apart along a transversal axis B with respect to longitudinal axis A.

Always as known, such side members 2', 2'' are connected by at least one transversal member 2‴.

Vehicle 1 further comprises a suspension system 3 for operatively connecting an axle 4 to the frame 2.

The axle 4 can be a mechanically operated axle or an electric axle. In such case, the axle 4 is provided with electric machines that are fed by the at least one battery module 100 to provide torque to the wheels carried by the electric axle or to receive electric energy generated by the electric machines when the vehicle is braking.

In particular, the suspension system 3 comprises a left side 3'' and a right side 3'. Since the right side 3' and the left side 3'' are similar, in particular symmetrical with respect to longitudinal axis A, only the left side 3" will be described for sake of brevity.

Furthermore, it is noticed that forward direction along longitudinal axis A coincides with travelling direction of the vehicle 1.

In the disclosed embodiment of figure 1, suspension system 3 comprises a support element 5, i.e. a spring beam, comprising a front terminal portion 5a and a rear terminal portion 5b extending along longitudinal axis A.

The support element 5 is connected to axle 4, as described below, in an intermediate portion 5c longitudinally comprised between front and rear terminal portions 5a, 5b.

In particular, the support element 5 is connected to the respective axle 4 via a connection assembly(not shown) preferably comprising retaining means (not shown) configured to exert a compression force between the axle 4, the support element 5 (and, in case, plate elements) so as to maintain this latter connected together by friction.

Each the front and rear terminal portions 5a, 5b are connected to frame 2, i.e. to the respective side member 2', 2", via spring means such as an air bellow 6 interposed in a vertical direction between the frame 2 and the support element 5, i.e. along a vertical axis C perpendicular to longitudinal and transversal axes A, B.

In particular, air bellow 6 comprises an upper portion 6a configured to be connected to frame 2 and a lower portion 6b that is connected to the respective front or rear terminal portion 5a, 5b.

In the disclosed embodiment, both lower portions 6b are connected directly to the front or rear terminal portions 5a, 5b by fixed connection, such as via threaded elements.

Moreover, the upper portions 6a are connected so that the front air bellow 6 is directly connected to the frame 2, e.g. by fixed connection, such as via threaded elements; conversely, the rear air bellow 6 is connected to the frame 2, in a fixed manner, as defined further below.

As per se known, each air bellow 6 comprises an air bag carried between the upper and lower portions 6a, 6b and configured to house pressurized air to dampen relative movements between such upper and lower portions 6a, 6b.

Suspension system 1 further comprises a transversal retaining element 13 configured to support transversal movements acting between the axle 4 and frame 2 but allowing vertical movement between these latter elements.

In particular, the transversal retaining element 13 comprises a V-shaped rod 14 provided therefore provided with a first and a second arm, both provided with first arm portions 14' and second arm portions 14''.

The first arm portions 14' are stably connected together while the second arm portions 14'' are spaced along transversal axis B direction getting over from the first arm portions 14'

Accordingly, the first and second arm portions 14', 14'' are inclined in a horizontal plane with respect to longitudinal axis so that each between their second portions gets closer to a respective side member 2',2''. In greater detail, the first and second arm portions 14', 14'' are symmetrical with respect to longitudinal axis A.

Advantageously, the first and second arms are realized as one piece.

The first arm portions 14' are connected to the axle 4 via a first hinge connection 13' that allows the rotation of such first arm portions 14' about an axis parallel to transversal axis B. More preferably, the first arm portions 14' are connected to axle 4 in an upper portion thereof.

The second arm portions 14'' are connected by a respective second hinge connection 13" to frame 2. In detail, in the disclosed embodiment, the second hinge connections are realized between the second arm portions 14'' and flanges 15 carried by the side member 2', 2'' extending within the space delimited therebetween along transversal axis B.

Suspension system 1 further comprises a longitudinal retaining element 16 configured to support longitudinal movements acting between the axle 4 and frame 2 but allowing vertical movement between these latter elements.

In particular, longitudinal retaining element 16 comprises a rod 17 connecting axle 4 to frame 2 via support element 5. In particular, such rod 17 connects axle 4 to a hanger 18 fixedly carried by side member 2', 2".

In greater detail longitudinal retaining element 16 comprises a first terminal portion 17a and a second terminal portion 17b along axis A.

The first terminal portion 17a is connected to the hanger 18 via a first hinge 17' and the second terminal portion 17b is connected to support element 5 via a second hinge 17". Both first and second hinges 17', 17" are configured to allow a motion about an axis parallel to transversal axis B of the respective terminal portion 17a, 17b.

It is noticed that the second terminal portion 17b is connected to the axle 4 underneath this latter and substantially in correspondence, along vertical axis C to the first portion 14' of the V-road 4.

Hanger 18 comprises an upper portion 18a configured to allow the fixation of the front hanger 18 to the respective side member 2', 2'' and a lower portion 18b configured to allow the connection of the rod 17 to the same.

Further details about an embodiment of such hanger 18 can be found in patent application IT102020000025021 that is incorporated herein by reference.

In particular, it is noticed that longitudinal retaining element 16 and the hanger 18 are placed oppositely to the axle 4 along longitudinal axis A with respect to transversal retaining element 13.

In particular, longitudinal retaining element 16 and the hanger 18 are placed rear along longitudinal axis A with respect to the axle 4; consequently the transversal retaining element 13 is placed forwardly with respect to the axle 4 along longitudinal axis A.

Moreover, it is noticed that the rear air bellow 6 is connected to the hanger 18, in particular to the upper portion 18a thereof, in particular to a longitudinal flange 18c extending along axis A with respect to the upper portion 18a.

The suspension system 1 further comprises a stabilizer bar 19 configured to dampen possible torque acting between the axle 4 and frame 2.

The stabilizer bar 19 comprises essentially a substantially a central portion 19' and a pair of terminal portions 19".

In detail, in the disclosed embodiment, the central portion 19' extends along transversal axis B and terminal portions 19'' extend along longitudinal axis A starting from extremities of the central portion 19'.

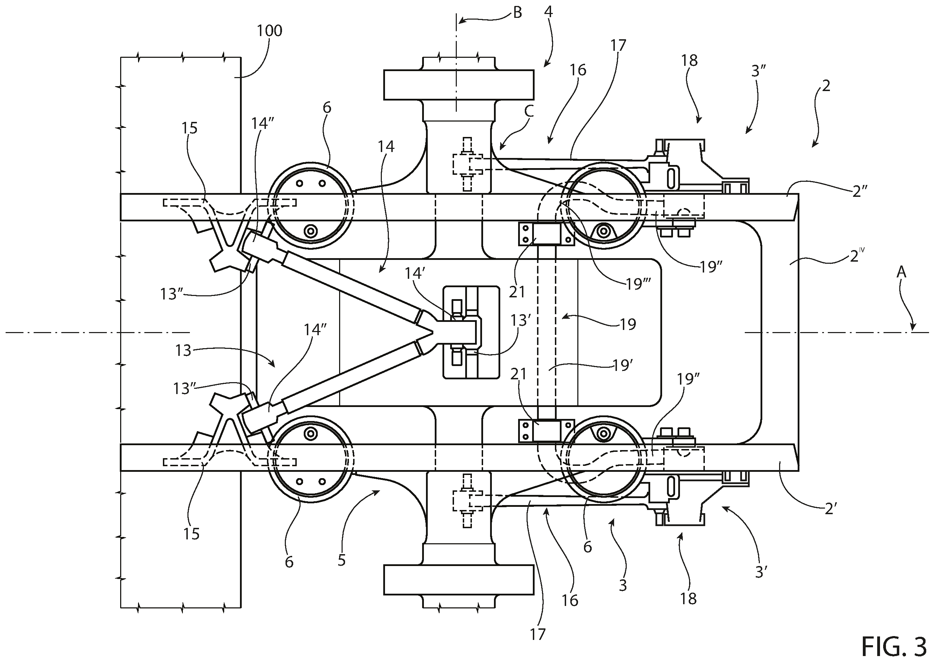

As better shown in figure 3, in the disclosed embodiment the central portion 19' is substantially straight such as the terminal portions 19''. Central portion 19' and the terminal portions 19'' are connected by joint portions 19‴ that are preferably curved.

In the disclosed embodiment, such joint portions 19‴ have a substantially circular radius shape extending so that the concavity of such radius shape is faced towards the space transversally delimited by terminal portions 19".

It is furthermore noticed that terminal portions 19'' are transversally comprised between the transversal extremity of the central portion 19'.

In particular, the central portion is 19' is placed between side members 2', 2'' and in particular the extremities are placed underneath these latter. The terminal portions 19'' are preferably correspondingly underneath the respective side member 2', 2''.

Moreover, torsional bar 19 is placed underneath the axle 4 and more in detail underneath the support element 5.

In detail, the torsional bar 19 is placed entirely on a side with respect to axle 4 and in particular rear to the axle 4.

According to the above configuration, it is noticed that except a portion of the support element 5, all the remaining elements except the transversal retaining element 13 are placed rear with respect to the axle along longitudinal axis A.

The central portion 19' is carried in a movable manner by frame 2, in detail by hinges 21 configured to support the central portion 19' in a rotatable manner, in particular allowing a rotation about an axis parallel to transversal axis B.

In particular, such hinges 21 are carried by support element 5.

The terminal portions 19" are connected to the frame 2, in particular to hanger 18 and more preferably in a movable manner by a coupling assembly 22.

The coupling assembly 22 preferably comprises a connection element 23, such as a pair of plate in the present embodiment, which is connected at its extremities to the frame 2 and to the terminal portion 19'' extremity by respective hinges 24', 24'', in particular parallel to each other and to transversal axis B.

In particular, the connection element 23 is carried by the frame 2 by the hanger 18 and in further detail by a projection 18d extending by the hanger 18 along transversal axis B, more in detail within side members 2', 2''.

The support element 5 can be furthermore connected to frame 2 via a damper (not shown) such as an hydraulic damper interposed along the aforementioned vertical direction. Such damper could be connected between the support element 5 and the frame 2 or at any suitable location according to the specific configuration. Further details about an embodiment of damper can be found in patent application IT102025000002358 that is incorporated herein by reference.

The suspension system 1 may further comprises stop means configured to avoid an excessive vertical motion of the axle 4 with respect to frame 2. Further details about an embodiment of stop means can be found in patent application IT102020000025021 that is incorporated herein by reference.

In particular, at least some among the mentioned hinges comprise elastomeric bushings.

The operation of the above-described suspension system 1 is the following.

During the motion of the vehicle the at least one axle 4 follows the shape of the road and may move with respect to the frame 2 of the vehicle 1. Torque is provided to the wheels via axle 4 by a torque source, such as an electric traction system powered by batteries 100, in present embodiment.

Such motions are dampened by suspension system 3, in particular:
- Vertical motions are dampened by air springs 6.;
- Transversal and longitudinal motions are compensated by V-rod 13 and longitudinal rod 16; and
- Torque motions are compensated by stabilizer bar 19.

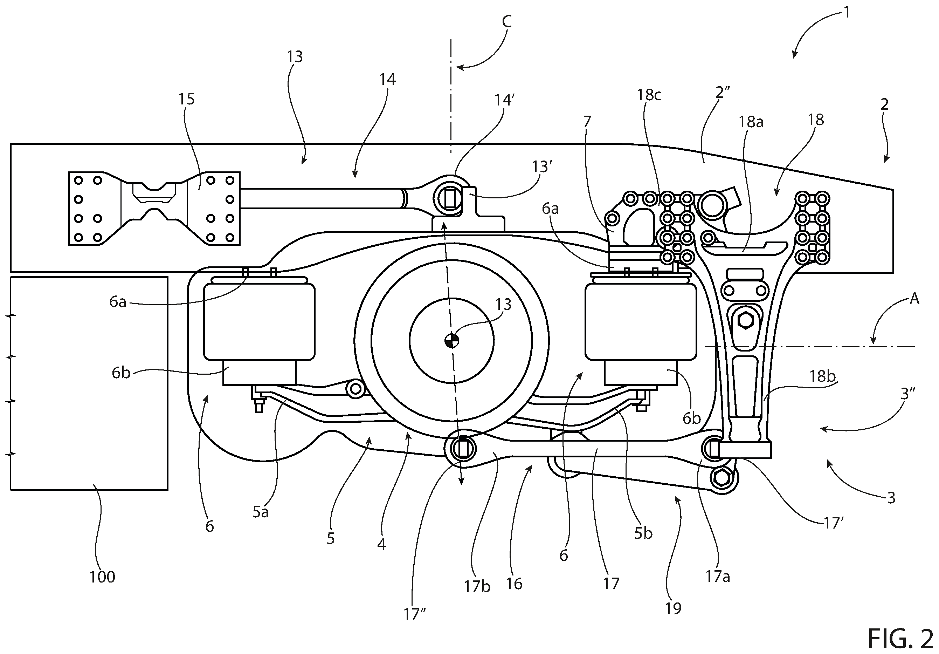

As can be appreciated in figure 2, the disposition of the V-rod, and in further particular the position of the V-rod first extremities 14' and the front portion 17b of the longitudinal rod 17 allow a substantially vertical motion of the axle 4, i.e. a movement that occurs substantially along vertical axis C with minimum displacement about longitudinal axis A.

In view of the foregoing, the advantages of the above-described suspension system according to the invention are apparent.

Thanks to the disposition of only the transversal retaining element on one side with respect to the axle and the remaining elements on the other side, it is possible to provide a great space for housing batteries and to avoid an extensive longitudinal motion of the axle.

Accordingly, since the longitudinal motion of the axle is reduced, possible collision with other elements, such as batteries, are avoided.

Such positive effects are furthermore increased via position of the longitudinal and retaining elements terminal portions that are substantially aligned along vertical axis C.

The overall disposition of the elements of the suspension furthermore allows a great suspensive effect while providing a very compact and simple arrangement.

Therefore costs and encumbrance of the suspension system are reduced.

It is clear that modifications can be made to the described suspension system which do not extend beyond the scope of protection defined by the claims.

For example, in general, the structure of the suspension system may vary according to the specific needs.

Moreover, the suspension system can be provided for front or rear axles configured as a drive or a tag axle or as a standard and an electric axle.

The shown and described fixation means, hinges and connections may be varied and be substituted by equivalent means, for instance, flange 15 described above that could be substituted by a cross-member or being absent or by elements of the connection assembly 22.

## Claims

1. Vehicle (1) comprising a frame (2) extending along a longitudinal axis (A) direction and a transversal axis (B) direction and at least one axle (4) and a suspension system (3) for connecting said at least one axle (4) to said frame (2), said suspension system (3) comprising
• a support element (5) comprising a front and a rear terminal portions (5a, 5b) along said longitudinal axis (A) and an intermediate portion (5c) comprised between these latter;
• a pair of spring means (6) operatively interposed between said front and rear terminal portions (5a, 5b) and said frame (2);
• a longitudinal retaining element (16) operatively interposed between said support element (5) and a hanger (18) fixedly carried by said frame (2);
• a transversal retaining element (13) operatively interposed between the axle (4) and said frame (2); and
• a stabilizer bar (19) operatively interposed between said support element (5) and said frame (2),
wherein said transversal retaining element (13) is placed on one between a front and a rear position with respect to said axle (4) along said longitudinal axis (A), said longitudinal retaining element (16) and said stabilizer bar (19) being placed in the other between the front and the rear position with respect to said axle (4) along said longitudinal axis (A).

2. Vehicle according to claim 1, wherein a connection (14') of said transversal retaining element (13) is placed vertically substantially coincident with a connection (17b) of said longitudinal retaining element (17).

3. Vehicle according to claim 1 or 2, wherein said longitudinal retaining element (16) comprises a longitudinal rod (17) hinged at its extremities (17a, 17b) between said support element (5) and said hanger (18).

4. Vehicle according to any of the preceding claims, wherein said transversal retaining element (13) comprises a V-rod (14) comprising a first and a second arms comprising first extremities (14') and second extremities (14"), said first and second extremities (14', 14'') being connected to said frame (2) and to said axle (4) via hinges configured to allow rotation of the respective extremities (14', 14'') about axis extending along said transversal axis (B).

5. Vehicle according to any of the preceding claims, wherein said spring means (6) comprises an air bellow provided with an upper and a lower portions (6a, 6b) fixed respectively to said frame (2) and to said support element (5).

6. Vehicle according to claim 5, wherein one among said spring means (6) is connected to a flange (8c) making part of said hanger (18)

7. Vehicle according to any of the preceding claims, wherein the intermediate potion (5c) is connected to said axle (4) via a connection assembly.

8. Vehicle according to any of the preceding claims, wherein said torsional bar (19) is placed under said axle (4) and/or under said support element (5) with respect to a vertical axis (C).

9. Vehicle according to any of the preceding claims, wherein said torsional bar (19) comprises a central portion (19') hinged to Said support element (5) and terminal portions (19'') operatively connected to said frame (2), wherein said central portion (19') is substantially straight along said transversal axis (B) and said terminal portions (19'') are substantially straight along said longitudinal axis (A).

10. Vehicle according to claim 9, wherein said terminal portions (19'') are placed underneath side members (2', 2") of said frame (2).

11. Vehicle according to claim 9 or 10, wherein said terminal portions (19'') are connected to said frame (2) via a connection assembly (22), said connection assembly (22) connecting said terminal portions (19'') to a projection (18d) carried by said hanger (18).

12. Vehicle according to any of claims from 9 to 11, further comprising joint portions (19‴) connecting said central and terminal portions (19', 19‴), said joint portions (19‴) being curved.

13. Vehicle according to any of the preceding claims, comprising stop means carried by frame (2) and configured to limit a vertical motion of said axle (4).

14. Vehicle according to any of the preceding claims, further comprising a damper operatively interposed between said frame (2) and said support element (5).

15. Vehicle according to any of the preceding claims, comprising batteries (100) carried by said frame (2), said batteries (100) being placed on the same side of said transversal retaining element (13) with respect to said axle (4).

16. Vehicle according to any of the preceding claims, wherein said axle (4) is an e-axle.
